# EUROPEAN PATENT APPLICATION

(11) **EP 4 683 317 A1**
(43) Date of publication of application: **21.01.2026**
(21) Application number: 24216586.8
(22) Date of filing: 29.11.2024
(51) Int. Cl.: H04N 7/18, H04N 5/77

(54) **IP CAMERA WITH INBUILT SSD STORAGE AND IP CAMERA MANAGEMENT SYSTEM AND METHOD**

(30) Priority: 19.07.2024 KR 20240095537
(71) Applicant: Hanwha Vision Co., Ltd., Seongnam-si, Gyeonggi-do 13488 (KR)
(72) Inventor: Sujith, Raman, 13488 Seongnam-si, Gyeonggi-do (KR); Kim, Min Joong, 13488 Seongnam-si, Gyeonggi-do (KR); Lee, Ji Hye, 13488 Seongnam-si, Gyeonggi-do (KR); Jo, Ju Young, 13488 Seongnam-si, Gyeonggi-do (KR)
(74) Representative: Gulde & Partner

(57) **Abstract**

A camera includes: a processor configured to control a management application; and a storage module storing instructions, executable by the processor, and the management application, where the processor is configured to execute the instructions to: configure at least one bucket respectively corresponding to at least one slave camera in the storage module, respectively store data about media clips captured by the at least one slave camera in the at least one bucket.

## Description

### CROSS-REFERENCE TO RELATED APPLICATION

This application is based on and claims priority under 35 U.S.C. §119 to Korean Patent Application No. 10-2024-0095537, filed on July 19, 2024, in the Korean Intellectual Property Office, the disclosure of which is incorporated herein in its entirety by reference.

### BACKGROUND

### 1. Field

The disclosure relates to an Internet protocol (IP) camera with inbuilt solid state drive (SSD) storage and an IP camera management system and method.

### 2. Description of the Related Art

Generally, to install a security camera across a wide range of sites, additional investment in providing a recorder and a local video management system (VMS) for monitoring and recording images is required. However, for small installations, the allocation of resources for a local VMS or recording equipment may be burdensome.

Small installations typically involve setting up a local VMS or recorder on site to monitor a camera operation, live video streaming, video recording, and event and metadata logging. These traditional setups require the purchase of individual channel-based licenses for the VMS, which incurs additional cost and maintenance requirements, thereby increasing the overall installation and operation costs of the facility. In order to manage a camera system in which multiple cameras are installed in a wide area, a local video management system (VMS) needs to be established. If a local video management system (VMS) is not established, the master camera must directly manage the video shooting, streaming, recording, etc. of multiple cameras, which may cause an overload on the master camera.

However, in the case of the present invention, the master camera is equipped with SSD storage, buckets are set, and a management application is installed. Through this, in the present invention, multiple slave cameras directly perform functions such as media clip upload and live streaming, so that the master camera can maintain a passive role and not place an excessive burden on the master camera.

Through this, the master camera can perform essential camera functions of the master camera while maintaining core functions such as live streaming, playback, and efficient event/metadata search.

### SUMMARY

Provided are an IP camera with inbuilt SSD storage and an IP camera management system and method. However, such an object is just an example, and the scope of the disclosure is not limited thereto.

Additional aspects will be set forth in part in the description which follows and, in part, will be apparent from the description, or may be learned by practice of the presented embodiments of the disclosure.

A camera comprising: a processor configured to control a management application; and a storage module storing instructions, executable by the processor, and the management application, where the processor is configured to execute the instructions to: configure at least one bucket respectively corresponding to at least one slave camera in the storage module, respectively store data about media clips captured by the at least one slave camera in the at least one bucket.

The processor may be further configured to generate an alarm based on data not being stored in a bucket among the at least one bucket for a preset time or more, or based on new data being added to the bucket among the at least one bucket.

The storage module may include a solid state drive (SSD).

The management application may include a web real-time communication (RTC) signaling server.

The processor may be further configured to, based on the management application being connected to the at least one slave camera and a browser client being connected to the web RTC signaling server, stream a live-image captured by the at least one slave camera from the at least one slave camera to the browser client.

The processor may be further configured to, via the management application, stream the live-image captured by the master camera from the master camera to the browser client.

The processor may be further configured to stream a media clip stored in the at least one bucket to a browser client based on a request from the browser client.

A camera management system comprising: a master camera; and at least one slave camera, where the master camera includes a storage module configured with at least one bucket respectively corresponding to the at least one slave camera, where the storage module stores a management application for managing the camera management system, where the at least one slave camera is configured to transmit data about a media clips captured by the at least one slave camera to the master camera, and where the master camera is configured to respectively store the data about the media clips in the at least one bucket.

The storage module may include a solid state drive (SSD).

The management application may include a web real-time communication (RTC) signaling server.

The management application may be connected to the at least one slave camera and a browser client via the web RTC signaling server, and be configured to stream a live-image captured by the at least one slave camera from the at least one slave camera to the browser client.

The management application may be further configured to stream the live-image captured by the master camera from the master camera to the browser client.

The management application may be further configured to stream a media clip stored in the at least one bucket to a browser client based on a request from the browser client.

According to an aspect of the disclosure, provided is a camera management method using a master camera and at least one slave camera, the camera management method may include: storing a management application in a storage module included in the master camera; configuring at least one bucket respectively corresponding to the at least one slave camera in the storage module; and respectively storing data about media clips captured by the at least one slave camera in the at least one bucket.

The storage module may include a solid state drive (SSD).

The camera management method may further include implementing a web real-time communication (RTC) signaling server in the management application.

The camera management method may further include streaming, by the management application connected to the at least one slave camera and a browser client via the web RTC signaling server, a live-image captured by the at least one slave camera from the at least one slave camera to the browser client.

The camera management method may further include streaming, by the management application, the live-image captured by the master camera from the master camera to the browser client.

The camera management method may further include streaming, by the management application, a media clip stored in the at least one bucket to a browser client based on a request of the browser client.

According to an aspect of the disclosure, provided is a non-transitory computer-readable storage medium storing a computer program that, when executed by at least one processor, causes the at least one processor to execute the camera management method including: storing a management application in a storage module included in the master camera; configuring at least one bucket respectively corresponding to the at least one slave camera in the storage module; and respectively storing data about media clips captured by the at least one slave camera in the at least one bucket.

Other aspects, features and advantages than described above will become apparent from the detailed description, claims, and drawings for carrying out the disclosure below.

### BRIEF DESCRIPTION OF DRAWINGS

The above and other aspects, features, and advantages of certain embodiments of the disclosure will be more apparent from the following description taken in conjunction with the accompanying drawings, in which:
FIG. 1 is a view for describing a configuration and an operation of an Internet protocol (IP) camera management system, according to an embodiment;
FIG. 2 is a view for describing a configuration and an operation of a storage module included in a master camera, according to an embodiment;
FIG. 3 is a view for describing a user interface (UI) of a management application displayed on a screen of a browser client, according to an embodiment;
FIG. 4 is a view for describing a live streaming method according to an embodiment;
FIG. 5 is a view for describing a streaming method according to an embodiment;
FIG. 6 is a flowchart of an IP camera management method according to an embodiment;
FIG. 7 is a flowchart of a live streaming method according to an embodiment; and
FIG. 8 is a flowchart of a streaming method according to an embodiment.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "or" includes any and all combinations of one or more of the associated listed items. Expressions such as "at least one of," when preceding a list of elements, modify the entire list of elements and do not modify the individual elements of the list.

The disclosure may have various modifications thereto and various embodiments, and thus exemplary embodiments will be illustrated in the drawings and described in detail in a detailed description. Effects and features of the disclosure, and methods for achieving them will become clear with reference to the embodiments described later in detail together with the drawings. However, the disclosure is not limited to the embodiments disclosed below and may be implemented in various forms.

Hereinafter, embodiments of the disclosure will be described in detail with reference to the accompanying drawings, and in description with reference to the drawings, the same or corresponding components are given the same reference numerals, and redundant description thereto will be omitted. It is to be understood that singular forms include plural referents unless the context clearly dictates otherwise. The terms including technical or scientific terms used in the disclosure may have the same meanings as generally understood by those skilled in the art.

In the following embodiments, the terms such as first, second, etc., have been used to distinguish one component from other components, rather than limiting. Singular forms include plural forms unless apparently indicated otherwise contextually. Herein, the terms "comprise", "include", "have", or the like, are intended to mean that there are features, components, steps, etc. described herein, but do not preclude the possibility of adding one or more other features, components, steps, etc.

In the drawings, the size of components may be exaggerated or reduced for convenience of description. For example, since the size and thickness of each component shown in the drawings are arbitrarily shown for convenience of description, the disclosure is not necessarily limited thereto.

In the following embodiments, when a portion, such as a region, a component, a portion or unit, a block, a module, etc., is present on or above another portion, this case may include not only a case where it is directly on the other portion, but also a case where another region, component, portion or unit, block, module, etc., is arranged between the portion and the other portion. When a region, a component, a portion or unit, a block, a module, etc., are connected, this case may include not only a case where a region, a component, a portion or unit, a block, and a module are directly connected, but also a case where they are connected indirectly by another region, component, portion or unit, block, and module arranged therebetween.

Hereinafter, various embodiments of the disclosure will be described in detail with reference to the accompanying drawings so that those of ordinary skill in the art may easily practice the disclosure.

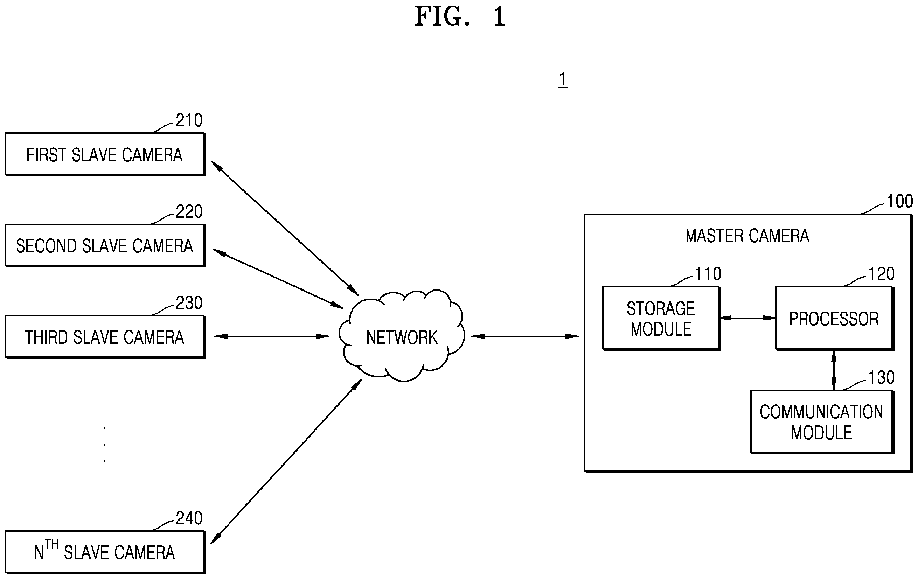

FIG. 1 is a view for describing a configuration and an operation of an Internet protocol (IP) camera management system, according to an embodiment.

Referring to FIG. 1, an IP camera management system 1 according to an embodiment may include a master camera 100, a first slave camera 210, a second slave camera 220, a third slave camera 230, and an n^{th} slave camera 240. However, the disclosure is not limited thereto, and the IP camera management system 1 may further include other components, or some components may be omitted therefrom. Some components of the IP camera management system 1 may be separated into a plurality of devices, and a plurality of components may be integrated into one device. For example, although the master camera 100 is shown in FIG. 1, the IP camera management system 1 may include one master camera or two or more plural master cameras. For example, the first slave camera 210, the second slave camera 220, the third slave camera 230, and the n^{th} slave camera 240 are shown in FIG. 1, but the IP camera management system 1 may include one slave camera or two or more plural slave cameras.

The master camera 100, the first slave camera 210, the second slave camera 220, the third slave camera 230, and the n^{th} slave camera 240 may be connected over a network to exchange data with one another.

The master camera 100 according to an embodiment may include a storage module 110, a processor 120, and a communication module 130. Although the storage module 110, the processor 120, and the communication module 130, which are components of the master camera 100, will be described below, the following description may also be equally applied to the first slave camera 210, the second slave camera 220, the third slave camera 230, and the n^{th} slave camera 240 including a respective a memory, a processor, and/or a communication module of each slave camera, which may have the same or similar structures to perform the same or similar functions or operations described herein as the storage module 110, the processor 120 and the communication module 130.

The communication module 130 may provide a function for communication with an external device through a network. For example, a request generated by the processor 120 of the master camera 100 according to a program code stored in a recording device such as the storage module 110 may be transmitted to the external device through the network under control of the communication module 130. Inversely, a control signal, an instruction, content, a file, etc., provided from the external device may be received by the master camera 100 through the communication module 130 via the network. For example, the control signal, the instruction, etc., of the external device received through the communication module 130 may be transmitted to the processor 120 or the storage module 110. The communication module 130 may include any one or any combination of a digital modem, a radio frequency (RF) modem, an antenna circuit, a WiFi chip, and related software and/or firmware.

A communication scheme is not limited and may include short-range wireless communication between devices as well as communications using a communication network (e.g., a mobile communication network, wired Internet, wireless Internet, a broadcast network). For example, the network may include one or more networks among a personal area network (PAN), a local area network (LAN), a campus area network (CAN), a metropolitan area network (MAN), a wide area network (WAN), a broadband network (BBN), Internet, etc. Moreover, the network may include, but not limited to, one or more of network topology including a bus network, a start network, a ring network, a mesh network, a star-bus network, a tree or hierarchical network, etc.

The communication module 130 may communicate with the external server through a network. The communication scheme is not limited, but the network may be a short-range wireless communication network. For example, the network may be a Bluetooth, Bluetooth low energy (BLE), or wireless fidelity (WiFi) communication network.

The master camera 100 according to the disclosure may be connected to the browser client 300 through the network to exchange data with each other. For example, the browser client 300 may be a wireless personal computer (PC) device including a UI module. For example, the browser client 300 may display a UI of the management application according to the disclosure. For example, the UI module may be a means for an interface with an input/output device. For example, the input device may include a device such as a keyboard, a mouse, etc., and the output device may include a device such as a display. In another example, the input/output interface may be a means for an interface with a device in which a function for input and a function for output are integrated into one, such as a touch screen. A browser client 300 according to embodiments of the present disclosure may include one or more processors. The one or more processors may include one or more of a central processing unit (CPU), a many integrated core (MIC), a field-programmable gate array (FPGA), a digital signal processor (DSP), a hardware accelerator, etc. The one or more processors may be able to perform control of any one or any combination of the other components connected thereto, and/or perform an operation or data processing relating to communication. The one or more processors execute one or more programs stored in a memory.

The storage module 110 may be a storage and include a recording device such as a solid state drive (SSD). Alternatively, the storage module 110 may be a computer-readable recording medium and include a permanent mass storage device such as random access memory (RAM), read only memory (ROM), and a disk drive. A program code for controlling the master camera 100 may be temporarily or permanently stored in the storage module 110.

The processor 120 may control overall operations of the master camera 100. The functions of the processor 120 may be implemented by one processor, or a plurality of processors. For example, the processor 120 may be implemented in the form selectively including a processor, an application-specific integrated circuit (ASIC), another chipset, a logic circuit, a register, a communication modem, and/or a data processing device, etc., known in art to perform the above-described operation. For example, the processor 120 may perform basic arithmetic, logic, and input/output operations, and execute a program code stored in the storage module 110. The processor 120 may store data in the storage module 110 or load data stored in the storage module 110.

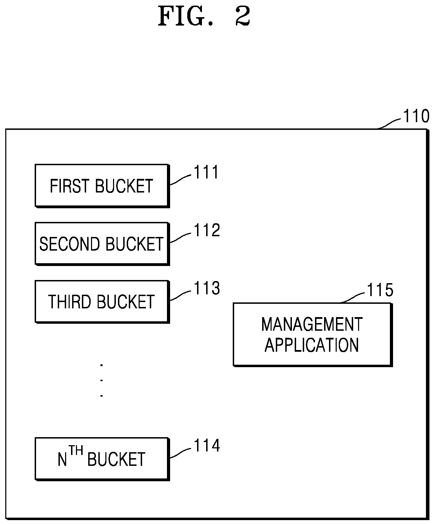

FIG. 2 is a view for describing a configuration and an operation of a storage module included in a master camera, according to an embodiment.

Referring to FIGS. 1 and 2 together, the IP camera management system 1 according to an embodiment may include the master camera 100 and at least one slave camera 210, 220, 230, and 240.

The master camera 100 according to an embodiment may be an IP camera. The at least one slave camera 210, 220, 230, and 240 may be an IP camera. The master camera 100 may communicate with the at least one slave camera 210, 220, 230, and 240.

The master camera 100 according to an embodiment may include the processor 120 and the storage module 110.

The processor 120 may control a management application 115 installed on the master camera 100.

The storage module 110 may store instructions executable by the processor 120 and have the management application 115 installed thereon.

The processor 120 according to an embodiment may configure at least one bucket 111, 112, 113, and 114 that respectively corresponds to the at least one slave camera 210, 220, 230, and 240 in the storage module 110 and store data regarding each slave camera 200. For example, the processor 120 may store data about a media clip captured by the at least one slave camera 210, 220, 230, and 240 in each of the at least one bucket 111, 112, 113, and 114. For example, the data about media clips may include still images, moving images, videos, and the like.

For example, as shown in FIG. 2, the storage module 110 may include the first bucket 111, the second bucket 112, the third bucket 113, and the n^{th} bucket 114. In this case, the first bucket 111 may correspond to the first slave camera 210 and store data regarding the first slave camera 210. The second bucket 112 may correspond to the second slave camera 220 and store data regarding the second slave camera 220. The third bucket 113 may correspond to the third slave camera 230 and store data regarding the third slave camera 230. The n^{th} bucket 114 may correspond to the n^{th} slave camera 240 and store data regarding the n^{th} slave camera 240.

The processor 120 according to an embodiment may generate an alarm when new data is not added to the buckets 111, 112, 113, and 114 for a preset time or more, or when new data is added to the buckets 111, 112, 113, and 114.

For example, as shown in FIG. 2, the management application 115 that manages the IP camera management system 1 may be installed in the storage module 110.

To store data regarding media clips captured by the at least one slave camera 200 respectively in the at least one bucket 111, 112, 113, and 114, the at least one slave camera 210, 220, 230, and 240 may transmit the data of the media clips to the master camera 100.

The management application 115 according to an embodiment may be implemented with a web real-time communication (RTC) signaling server. For example, the management application 115 may be an application that internally manages an object storage (mino) service, a mosquitto (MQTT) broker service, a web RTC signaling service, an API gateway service, and a NoSQL (unqlite) service. For example, the master camera 100 including the SSD storage according to an embodiment may include the management application 115 installed thereon, which may support a next lower-level module. For example, the lower-level module may include the main agent service, the API gateway, the object storage service, the web RTC signaling service, the MQTT broker service, the MQTT client service, and the tiny NoSQL (unqlite) service.

In the UI of the management application 115 according to an embodiment, the master camera and all the slave cameras are registered, and the management application 115 together with registration information may constitute a local object storage with a unique bucket name corresponding to each camera and a bucket allocation size may be set according to an available storage. For example, each slave camera as well as the master camera may upload a media clip onto the object storage of the management application 115 based on information set up in the UI of the management application 115 according to an embodiment. Herein, the object storage of the management application 115 may correspond to a bucket.

For example, when the media clip is uploaded, each camera may add metadata including a signature algorithm and signature information to identify integrity and reliability of a file. For example, a device unique certificate may be used for a hash signature. In this case, 2-step verification including a hash and a signature may be possible. For example, integrity check may allow a user to determine whether object data is not damaged or changed. For example, authenticity check may include checking authenticity of the hash through the signature to determine whether an object is signed by an object key owner and is not falsified after signed. As such, a 2-step process may reinforce security by guaranteeing both integrity and reliability in case of an access to an object of a storage.

For example, to quickly check an event related to a media clip uploaded onto a bucket, metadata may be defined in a media clip and preset information may be added to the metadata when the media clip is uploaded. For example, an event code may include motion detection (MD), face detection (FD), object detection (OD), an intelligent video area (IVA), an intelligent video line (IVL), social distance detection (SDD), alarm IN (ALMI), alarm OUT (ALMO), etc.

The master camera having the SSD storage according to an embodiment may periodically monitor each bucket and determine whether a file is regularly uploaded. The master camera may transmit an alarm to an event when there is no file uploaded to a bucket for a preset threshold time. When a bucket use amount is close to a maximum allocation, an old file may be removed.

For example, for each camera/bucket in the UI of the management application 115, the user may selectively activate cloud synchronization. For example, when cloud synchronization is activated, local data may be synchronized with a remote S3 storage of a cloud.

For example, when a file is not added to a specific bucket for a specific period of time, an event may occur and in response to the event, FTP, MAIL, MQTT, PRESET movement or HTTP instruction notifications may be transmitted. For example, when a geographic location and a geographic direction of a camera are known, an adjacent PTZ camera may be instructed to move toward the camera without recording.

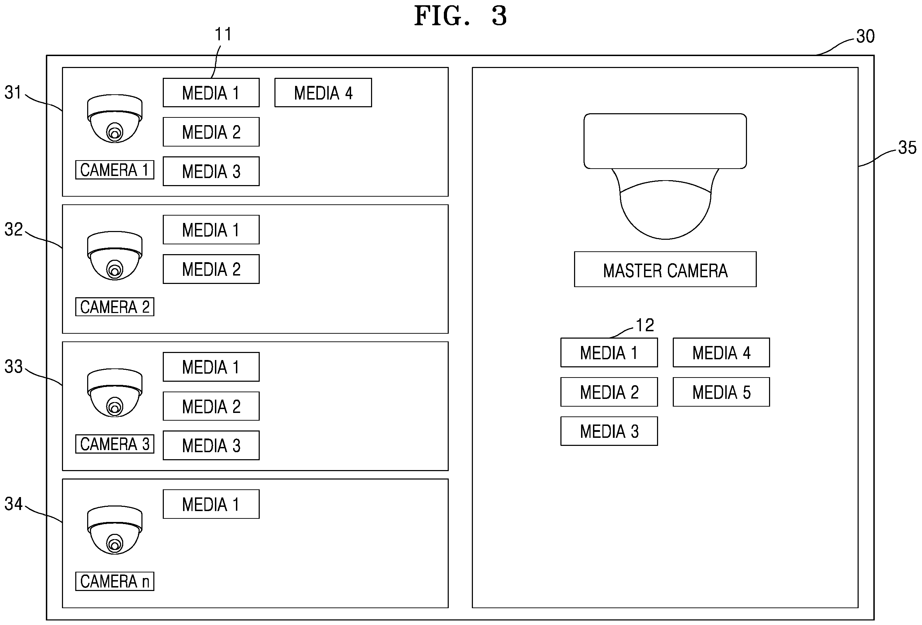

FIG. 3 is a view for describing a UI of a management application displayed on a screen of a browser client, according to an embodiment.

Referring to FIG. 3, an example of the UI of the management application 115 according to an embodiment is shown. For example, the UI of the management application 115 may be displayed on a display of the browser client 300. For example, the browser client 300 may be a PC device communicating with the master camera 100. Alternatively, the browser client 300 may be a UI device included in the master camera 100.

For example, as shown in FIG. 3, on a UI 30 of the management application 115, screens for a first object storage 31 of the first slave camera 210, a second object storage 32 of the second slave camera 220, a third object storage 33 of the third slave camera 230, an n^{th} object storage 34 of the n^{th} slave camera 240, and a master object storage 35 of the master camera 100 may be displayed. For example, each object storage may correspond to a bucket of the storage module 110. For example, as shown in FIG. 3, an icon 11 for a first media clip may be displayed on a screen for the first object storage 31 of the first slave camera 210, and in this case, data regarding the first media clip may be stored in the first bucket 111. An icon 12 for a second media clip may be displayed on a screen for the master object storage 35 of the master camera 100, and in this case, data regarding the second media clip may be stored in the bucket corresponding to the master camera 100 of the storage module 110.

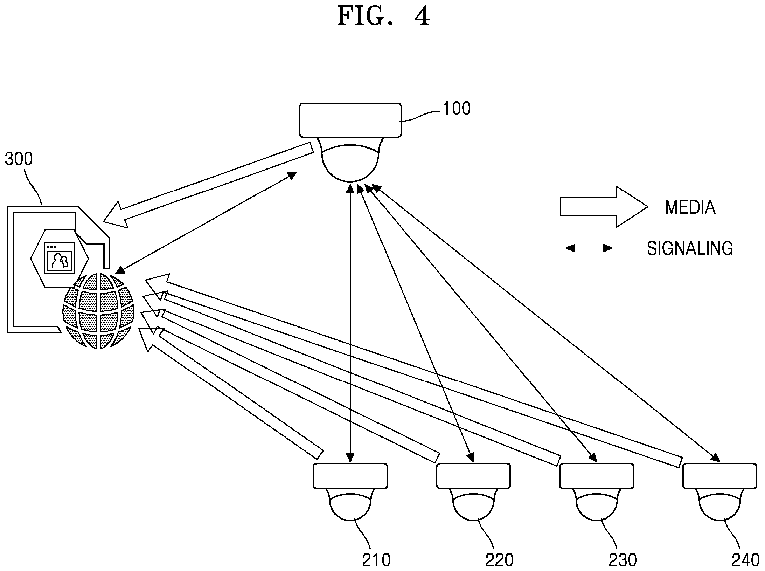

FIG. 4 is a view for describing a live streaming method according to an embodiment.

Referring to FIG. 4, the management application 115 included in the master camera 100 according to an embodiment may be connected to the slave camera 200 and the browser client 300 by using a web RTC signaling server.

The management application 115 may live-stream an image captured by the slave camera 200 from the slave camera 200 to the browser client 300. In this case, the image captured by the slave camera 200 may be directly live-streamed from the slave camera 200 to the browser client 300.

The management application 115 may live-stream an image captured by the master camera 100 from the master camera 100 to the browser client 300.

For example, as shown in FIG. 4, the at least one slave camera 210, 220, 230, an 240 may be connected to the web RTC signaling server implemented in the management application 115 of the master camera 100. The browser client 300 may be connected to the web RTC signaling server implemented in the management application 115. Next, when the browser client 300 sets up a connection with the master camera 100, a list of all authenticated cameras may be displayed to a user and a video feed may be directly live-streamed to the browser client 300 from the at least one slave camera 210, 220, 230, and 240 and the master camera 100. For example, live streaming may be directly performed on an individual camera by using web RTC, allowing the master camera to maintain a manual role without an excessive burden on a processing capacity.

According to an embodiment, various instructions such as PTZ control, imaging setting, or other supplementary tasks may be transmitted to each camera by using a data channel function of web RTC.

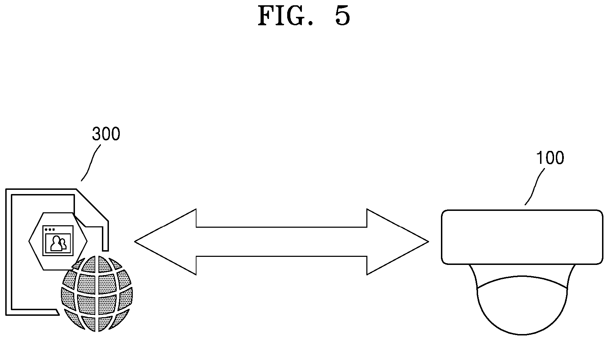

FIG. 5 is a view for describing a streaming method according to an embodiment.

Referring to FIGS. 3 and 5 together, the management application 115 included in the master camera 100 according to an embodiment may stream, to the browser client 300, the media clips stored in the at least one bucket 111, 112, 113, and 114 in response to a request for the browser client 300.

For example, when the user selects a media clip on a camera accessible using an API gateway on a play page of the browser client 300, the media clip may be downloaded on a memory of the browser client 300 and directly played on a browser of the browser client 300.

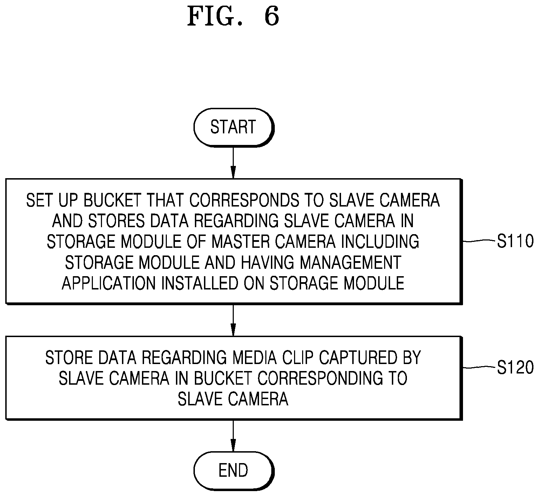

FIG. 6 is a flowchart of an IP camera management method according to an embodiment.

Referring to FIG. 6, in a method of managing an IP camera using a master camera and at least one slave camera, in operation S110, a bucket that corresponds to the slave camera and stores data regarding a slave camera may be set up for the slave camera in a storage module of a master camera including a storage module in which a management application is installed.

In operation S120, data regarding a media clip captured by the at least one slave camera may be stored in at least one bucket respectively corresponding to the at least one slave camera.

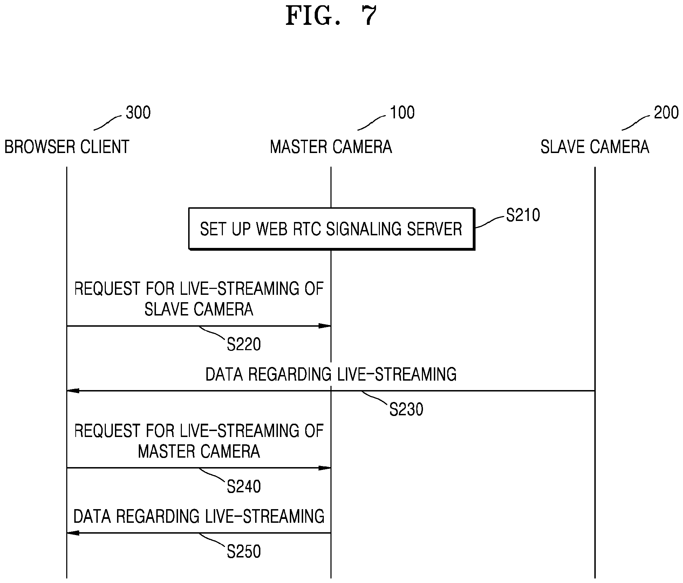

FIG. 7 is a flowchart of a live streaming method according to an embodiment.

Referring to FIG. 7, in the IP camera management method according to an embodiment, in operation S210, a web RTC signaling server may be implemented in the management application of the master camera 100. For example, the management application included in the master camera 100 may be connected to the browser client 300 and the slave camera 200 by using the web RTC signaling server.

In operation S220, the master camera 100 may receive a request for live streaming of the slave camera 200 from the browser client 300.

In operation S230, the management application included in the master camera 100 may live-stream an image captured by the slave camera 200 to the browser client 300 from the slave camera 200. In this case, data regarding live streaming may be directly transmitted from the slave camera 200 to the browser client 300.

In operation S240, the master camera 100 may receive a request for live streaming of the master camera 100 from the browser client 300.

In operation S250, the management application may live-stream an image captured by the master camera 100 from the master camera 100 to the browser client 300. In this case, data regarding live streaming may be directly transmitted from the master camera 100 to the browser client 300.

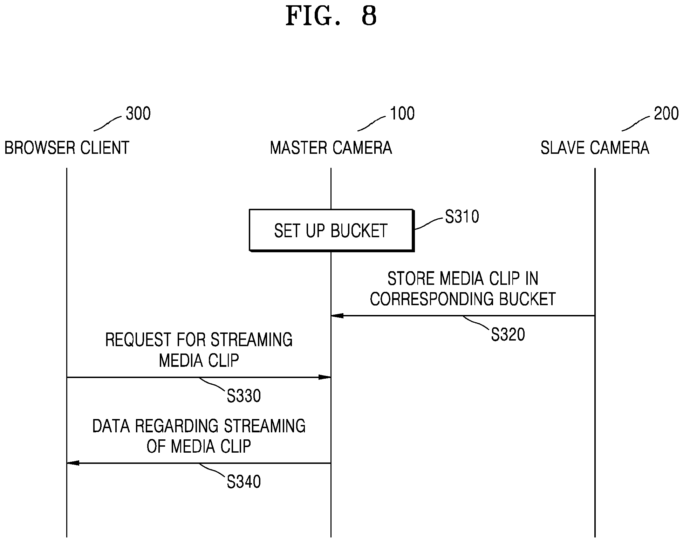

FIG. 8 is a flowchart of a streaming method according to an embodiment.

Referring to FIG. 8, in an IP camera management method according to an embodiment, in operation S310, a bucket corresponding to the slave camera 200 may be set up in the storage module 110 included in the master camera 100.

In operation S320, a media clip for the slave camera 200 may be stored in a bucket corresponding to the slave camera 200.

In operation S330, the master camera 100 may receive a request for live streaming of the media clip stored in the bucket from the browser client 300.

In operation S340, the master camera 100 may stream the media clip stored in the bucket to the browser client 300 in response to the request of the browser client 300.

According to the disclosure, a small installation process may be simplified by introducing a master camera equipped with an SSD, a camera management application including an object storage, and a web RTC signaling server. Moreover, an instruction may be transmitted to an individual camera by using a data channel.

According to the disclosure, without a VMS license or a dedicated server for a camera system, the management of a large number of cameras may be supported without an overload on a master camera, by using a monitoring camera management solution. In this way, the master camera may perform essential camera functions of the master camera while maintaining key functions such as live streaming, playback, and efficient event/metadata search.

The apparatus and/or system described above, including each of the at least one the master camera 100, slave camera 200, and the browser client 300, may be implemented by a hardware component, a software component, and/or a combination of the hardware component and the software component. The apparatus and components described in the embodiments may be implemented using one or more of a general-purpose or special-purpose computers such as, for example, one or more of a processor, a controller, an arithmetic logic unit (ALU), a digital signal processor, a microcomputer, a field programmable gate array (FPGA), a programmable logic unit (PLU), a microprocessor, or any other device capable of executing and responding to instructions. A processing device may execute an operating system (OS) and one or more software applications running on the OS. The processing device may access, store, manipulate, process, and generate data in response to execution of software. For convenience of understanding, it is described that one processing device is used, but those of ordinary skill in the art would recognize that the processing device includes a plurality of processing elements and/or a plurality of types of processing elements. For example, the processing device may include a plurality of processors or one processor and one controller. Alternatively, other processing configurations such as parallel processors may be possible.

Software may include a computer program, a code, an instruction, or a combination of one or more thereof, and may configure a processing device to operate as desired or independently or collectively instruct the processing device. The software and/or data may be permanently or temporarily embodied in any type of machine, component, physical device, virtual equipment, computer storage medium or device, or signal wave to be transmitted, so as to be interpreted by or to provide instructions or data to the processing device. The software may be distributed over computer systems connected through a network and may be stored or executed in a distributed manner. The software and data may be stored in one or more computer-readable recording media.

The method according to the embodiments may be implemented in the form of program commands that can be executed through various computer components and recorded in a computer-readable recording medium. The computer-readable recording medium may include a program command, a data file, a data structure, etc., alone or in a combined manner. The program command recorded in the medium may be a program command specially designed and configured for the embodiments or a program command known to be used by those skilled in the art of the computer software field. Examples of the computer-readable recording medium may include magnetic media such as hard disk, floppy disk, and magnetic tape, optical media such as compact disk read only memory (CD-ROM) and digital versatile disk (DVD), magneto-optical media such as floptical disk, and a hardware device especially configured to store and execute a program command, such as read only memory (ROM), random access memory (RAM), flash memory, etc. Examples of the program command may include not only a machine language code created by a complier, but also a high-level language code executable by a computer using an interpreter. The foregoing hardware device may be configured to be operated as at least one software module to perform an operation of the embodiments, or vice versa.

The above-described embodiments are merely specific examples to describe technical content according to the embodiments of the disclosure and help the understanding of the embodiments of the disclosure, not intended to limit the scope of the embodiments of the disclosure. Accordingly, the scope of various embodiments of the disclosure should be interpreted as encompassing all modifications or variations derived based on the technical spirit of various embodiments of the disclosure in addition to the embodiments disclosed herein. For example, even when described techniques are performed in a sequence different from the described method and/or components such as systems, structures, devices, circuits, etc. are combined or connected differently from the described method, or replaced with other components or equivalents, an appropriate result may be achieved.

Therefore, other implementations, other embodiments, and equivalents to the claims may also fall within the scope of the claims provided below.

As described above, according to an embodiment, an IP camera having an SSD storage built therein, and an IP camera management system and method may be implemented in which a VMS license or server setup is not required, thereby reducing installation and configuration costs for small installations. However, the scope of the disclosure is not limited by these effects.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

## Claims

1. A camera comprising:
a processor (120) configured to control a management application (115); and
a storage module (110) storing instructions, executable by the processor (120), and the management application (115),
wherein the processor (120) is configured to execute the instructions to:
configure at least one bucket (111, 112, 113, 114) respectively corresponding to at least one slave camera (210, 220, 230, 240) in the storage module (110),
respectively store data about media clips captured by the at least one slave camera (210, 220, 230, 240) in the at least one bucket (111, 112, 113, 114).

2. The camera of claim 1, wherein the processor (120) is further configured to generate an alarm based on data not being stored in a bucket (111, 112, 113, 114) among the at least one bucket (111, 112, 113, 114) for a preset time or more, or based on new data being added to the bucket (111, 112, 113, 114) among the at least one bucket (111, 112, 113, 114).

3. The camera of claim 1, wherein the storage module (110) comprises a solid state drive, SSD.

4. The camera of claim 1, wherein the management application (115) comprises a web real-time communication, RTC, signaling server.

5. The camera of any one of claim 1 to 4, wherein the processor (120) is further configured to, based on the management application (115) being connected to the at least one slave camera (210, 220, 230, 240) and a browser client (300) being connected to the web RTC signaling server, stream a live-image captured by the at least one slave camera (210, 220, 230, 240) from the at least one slave camera (210, 220, 230, 240) to the browser client (300).

6. The camera of any one of claim 1 to 5, wherein the processor (120) is further configured to, via the management application (115), stream the live-image captured by the camera from the camera to the browser client (300).

7. The camera any one of the previous claims, wherein the processor (120) is further configured to stream a media clip stored in the at least one bucket (111, 112, 113, 114) to a browser client (300) based on a request from the browser client (300).

8. A camera management system (1) comprising:
a master camera (100); and
at least one slave camera (210, 220, 230, 240),
wherein the master camera (100) comprises a storage module (110) configured with at least one bucket (111, 112, 113, 114) respectively corresponding to the at least one slave camera (210, 220, 230, 240),
wherein the storage module (110) stores a management application (115) for managing the camera management system,
wherein the at least one slave camera (210, 220, 230, 240) is configured to transmit data about a media clips captured by the at least one slave camera (210, 220, 230, 240) to the master camera (100), and
wherein the master camera (100) is configured to respectively store the data about the media clips in the at least one bucket (111, 112, 113, 114).

9. The camera management system (1) of claim 8, wherein the storage module (110) comprises a solid state drive, SSD.

10. The camera management system (1) of claim 8, wherein the management application (115) comprises a web real-time communication, RTC, signaling server.

11. The camera management system (1) of any one of claims 8 to 10, wherein the management application (115) is connected to the at least one slave camera (210, 220, 230, 240) and a browser client (300) via the web RTC signaling server, and is configured to stream a live-image captured by the at least one slave camera (210, 220, 230, 240) from the at least one slave camera (210, 220, 230, 240) to the browser client (300).

12. The camera management system (1) of any one of claims 8 to 11, wherein the management application (115) is further configured to stream the live-image captured by the master camera (100) from the master camera (100) to the browser client (300).

13. The camera management system (1) of any one of claims 8 to 12, wherein the management application (115) is further configured to stream a media clip stored in the at least one bucket (111, 112, 113, 114) to a browser client (300) based on a request from the browser client (300).

## Amended claims

### Amended claims in accordance with Rule 137(2) EPC.

1. A camera comprising:
a processor (120) configured to control a management application (115); and
a storage module (110) storing instructions, executable by the processor (120), and the management application (115),
wherein the processor (120) is configured to execute the instructions to:
configure at least one bucket (111, 112, 113, 114) respectively corresponding to at least one slave camera (210, 220, 230, 240) in the storage module (110),
respectively store data about media clips captured by the at least one slave camera (210, 220, 230, 240) in the at least one bucket (111, 112, 113, 114).
wherein the bucket is sized according to each bucket allocation for each slave camera, and the master camera monitors file uploads and bucket usage for each bucket.

2. The camera of claim 1, wherein the processor (120) is further configured to generate an alarm based on data not being stored in a bucket (111, 112, 113, 114) among the at least one bucket (111, 112, 113, 114) for a preset time or more, or based on new data being added to the bucket (111, 112, 113, 114) among the at least one bucket (111, 112, 113, 114).

3. The camera of claim 1, wherein the storage module (110) comprises a solid state drive, SSD.

4. The camera of claim 1, wherein the management application (115) comprises a web real-time communication, RTC, signaling server.

5. The camera of any one of claim 1 to 4, wherein the processor (120) is further configured to, based on the management application (115) being connected to the at least one slave camera (210, 220, 230, 240) and a browser client (300) being connected to the web RTC signaling server, stream a live-image captured by the at least one slave camera (210, 220, 230, 240) from the at least one slave camera (210, 220, 230, 240) to the browser client (300).

6. The camera of any one of claim 1 to 5, wherein the processor (120) is further configured to, via the management application (115), stream the live-image captured by the camera from the camera to the browser client (300).

7. The camera any one of the previous claims, wherein the processor (120) is further configured to stream a media clip stored in the at least one bucket (111, 112, 113, 114) to a browser client (300) based on a request from the browser client (300).

8. A camera management system (1) comprising:
a master camera (100); and
at least one slave camera (210, 220, 230, 240),
wherein the master camera (100) comprises a storage module (110) configured with at least one bucket (111, 112, 113, 114) respectively corresponding to the at least one slave camera (210, 220, 230, 240),
wherein the storage module (110) stores a management application (115) for managing the camera management system,
wherein the at least one slave camera (210, 220, 230, 240) is configured to transmit data about a media clips captured by the at least one slave camera (210, 220, 230, 240) to the master camera (100), and
wherein the master camera (100) is configured to respectively store the data about the media clips in the at least one bucket (111, 112, 113, 114),
wherein the bucket is sized according to each bucket allocation for each slave camera, and the master camera monitors file uploads and bucket usage for each bucket.

9. The camera management system (1) of claim 8, wherein the storage module (110) comprises a solid state drive, SSD.

10. The camera management system (1) of claim 8, wherein the management application (115) comprises a web real-time communication, RTC, signaling server.

11. The camera management system (1) of any one of claims 8 to 10, wherein the management application (115) is connected to the at least one slave camera (210, 220, 230, 240) and a browser client (300) via the web RTC signaling server, and is configured to stream a live-image captured by the at least one slave camera (210, 220, 230, 240) from the at least one slave camera (210, 220, 230, 240) to the browser client (300).

12. The camera management system (1) of any one of claims 8 to 11, wherein the management application (115) is further configured to stream the live-image captured by the master camera (100) from the master camera (100) to the browser client (300).

13. The camera management system (1) of any one of claims 8 to 12, wherein the management application (115) is further configured to stream a media clip stored in the at least one bucket (111, 112, 113, 114) to a browser client (300) based on a request from the browser client (300).
